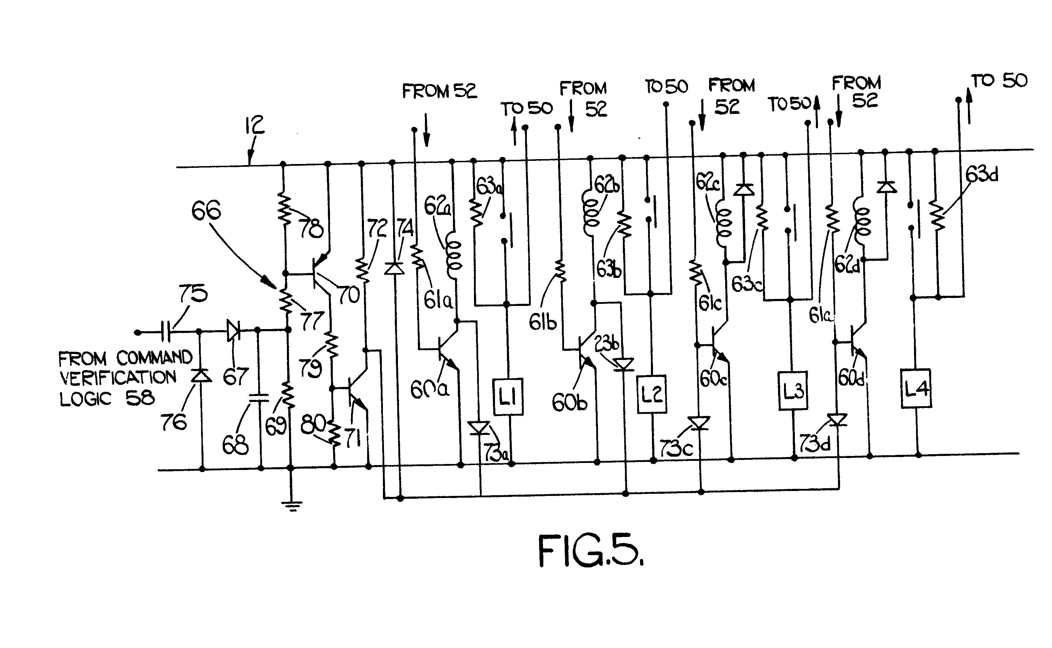

Korrigiertes Exemplar
Clean proof copy } Fig. 5
Exemplaire corrigé

Europäisches Patentamt

(19) European Patent Office

Office européen des brevets

(11) Publication number: **0 000 427**
**A1**

(12) **EUROPEAN PATENT APPLICATION**

(21) Application number: 78300099.5

(22) Date of filing: 28.06.78

(51) Int. Cl.²: **B60R18/04, H04Q9/14**

(30) Priority: 09.07.77 GB 28897/77

(71) Applicant: LUCAS INDUSTRIES LIMITED, Great King Street, Birmingham, B19 2XF (GB)

(43) Date of publication of application: 24.01.79
Bulletin 79/2

(72) Inventor: Reed, Kenneth Richard Bradbury, 17 Lynwood Road Ealing, London W.5 (GB)

(74) Representative: Prutton, Roger et al, MARKS & CLERK Alpha Tower A.T.V.Centre, Birmingham B1 ITT (GB)

(84) Designated Contracting States: DE FR GB NL

(54) **Road vehicle electrical systems.**

(57) A road vehicle electrical system includes a digitally controlled multiplex system whereby load devices distributed around the vehicle are controlled by signals from a transmitter connected to a plurality of receivers each controlling a group of load control devices. The transmitter produces a pulse train divider into digital words, each word including one set of bits identifying an address of a receiver and another set identifying an instruction code for the loads controlled by that receiver and determined by switches operable by the driver. Each receiver includes an address identification circuit and a storage device for the instruction code. A receiver acts on an instruction code only if the same instruction code is received in two successive cycles of the transmitter.

This invention relates to road vehicle electrical systems of the general type wherein a plurality of loads at different positions in the vehicle are controlled by a cyclically repeated signal sequence, power being supplied to the load by common conductors extending to all the loads in the system.

In such systems various suggestions have been made in the past for controlling the loads by signals on a single signal line extending to load control devices associated with the respective loads. Pulse length modulation and pulse position modulation have both been suggested, but it has always been found difficult to ensure that the signal generating or transmitting part of the system always remains in synchronism with the various load control devices. It has also been suggested that a sequence of analog level signals can be used to obtain synchronism and whilst this is possible the circuits involved are likely to be expensive if adequate reliability is to be obtained. Furthermore, such analog level systems have limited resolution-thereby limiting the number of available channels, and may also be prone to interference problems.

The present invention makes use of pulse code modulated signal both to identify the loads or groups of loads to be controlled and also to provide signals for controlling the loads.

A vehicle electrical system in accordance with the invention comprises a plurality of switch devices, a multiplicity of load devices each controlled by a corresponding load control device arranged in a number of groups, a pulse code modulated signal generating device cyclically generating on a data rail a pulse train consisting of a series of digital words, each word including one set of bits defining an address code for the various groups of load control devices and a further set of bits defining a utilization code indicating the required state of the load
control devices in the group in accordance with the condition of associated ones of the switch devices, each group
of load control devices having an associated digital control circuit connected to said data rail including address
code recognition means and storage means for storing the
utilization code associated with its address code in the
pulse train, said storage means providing output signals to
the load control devices of the group and means for updating the utilization code stored in the storage means
only when the same utilization code is received by the
digital control circuit in two successive cycles of the
signal generating device.

The system may also include a clock signal rail on
which there are provided synchronising signals.  The individual groups of load control devices preferably each
have an internal clock which is reset periodically by the
signals on the clock signal rail so that its frequency need
only be approximately matched with a master clock which is
used in the p.c.m. signal generating device.

The accompanying drawings show one example of a road
vehicle electrical system in accordance with the invention,
and in the drawings:-
    Figure 1 is a diagrammatic representation of the
whole system;
    Figure 2 is a diagrammatic representation of a pulse
code modulation signal generator forming part of the
system;
    Figure 3 is a diagram of a logic circuit forming part
of the generator of Figure 2;
    Figure 4 is a diagram of one group digital control
circuit of the system; and
    Figure 5 is a detailed diagram of a group of load
control devices controlled by the circuit of Figure 4.

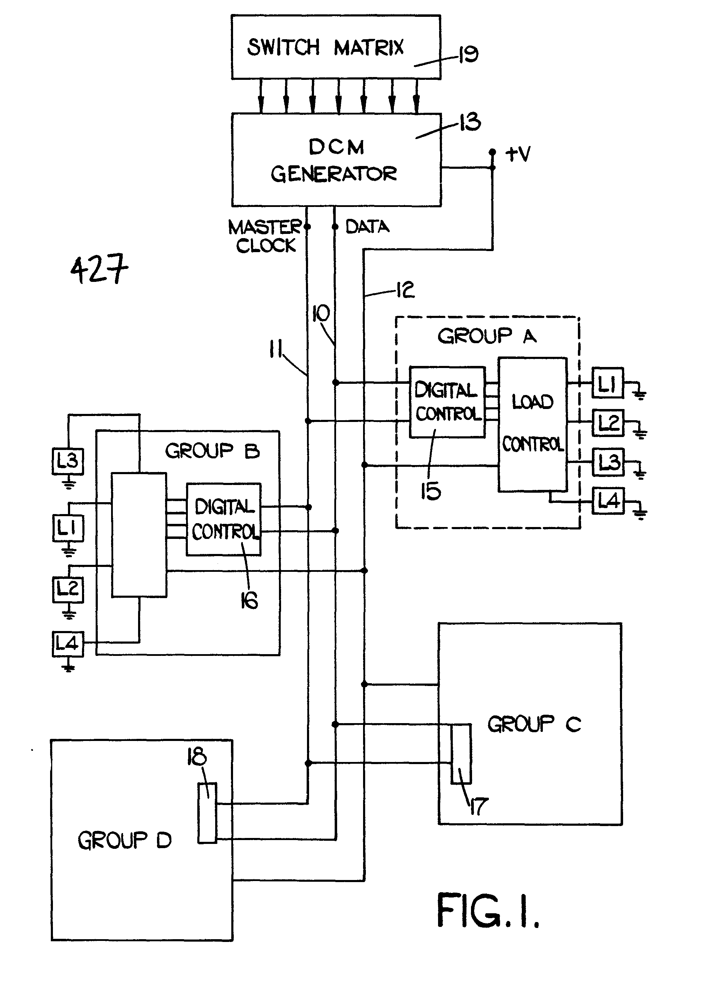

Referring firstly to Figure 1, the system includes a data rail 10, a master clock rail 11 and a supply rail 12 which extend from a pulse code modulated signal generator 13 to a plurality of digital control circuits 15, 16, 17 18 etc., Each digital control circuit controls four different loads in the vehicle system in accordance with signals it receives from the generator 13 which are in turn determined by the settings of switches in a switch matrix 19.

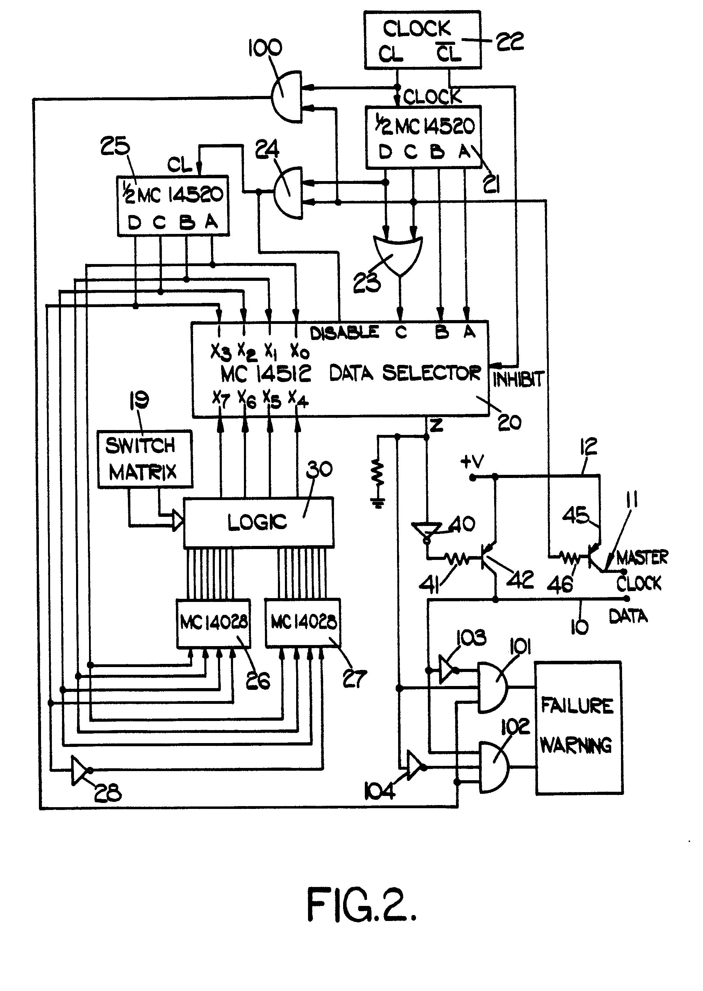

Turning now to Figure 2 it will be seen that the generator makes use of an 8-channel data selector 20 (Motorola CMOS integrated circuit type MC 14512) to generate signals at its Z data output terminal according to the binary code applied to its A, B and C input terminals and the corresponding inputs at its $X_0$ ...........$X_7$ data input terminals. A four bit binary counter 21 is driven by a clock 22 so that the signals at its A, B, C and D output terminals progress through the usual binary counting sequence 0000,0001 0010........etc. The A and B output terminals of the counter 21 are connected to the A and B input terminals of the selector 20, but the C and D output terminals of the counter 21 are connected to two input terminals of an OR gate 23, the output terminal of which is connected to the C input terminal of the selector 21. The INHIBIT input terminal of the selector 20 is connected to a $\overline{CLOCK}$ terminal of the clock 22, so that spurious signals occurring during changes in the counter state are not transmitted.

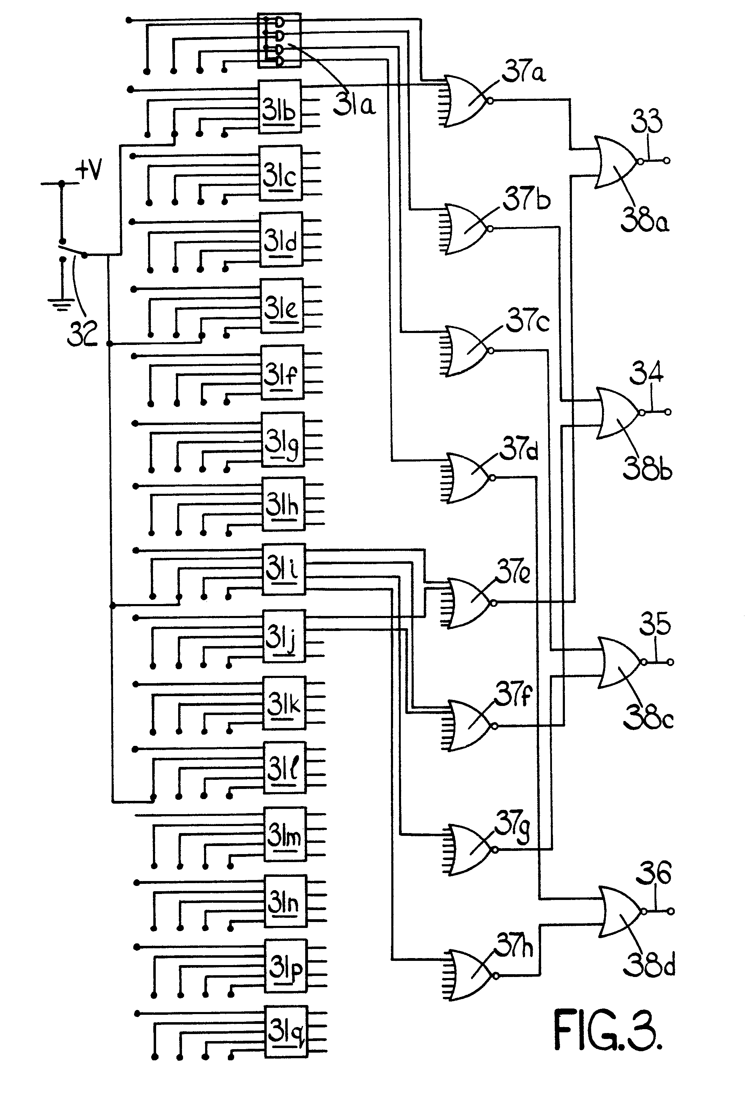

The C and D output terminals of the counter 21 are also connected to two input terminals of an AND gate 24, the output terminal of which is connected to the CLOCK terminal of another 4-bit binary counter 25 and also to the DISABLE terminal of the selector 20. The A, B, C, and D output terminals of the counter 25 are connected to the $X_0$, $X_1$, $X_2$ and $X_3$ data input terminals of the selector 20. There are also provided two binary to octal decoders 26, 27 (Motorola MC 14028 CMOS integrated circuits) connected with an inverter 28 in known manner to provide 1 of 16 decoding and the sixteen outputs of those decoders 26, 27 are applied to a logic circuit 30 (see Figure 3) the four outputs of which are applied to the $X_4$, $X_5$, $X_6$ and $X_7$ data input terminals of the selector 20.

Turning briefly to Figure 3 the logic circuit 30 is seen to comprise sixteen quadruple two input AND gates $31^{\underline{a}}$ ..........$31^{\underline{q}}$.

Each group of AND gates has an input from an associated one of the outputs of the decoders 26, 27 and also has four inputs from the switch matrix 19. One example of a connection to the switch matrix is shown. A switch 32 is connected to four different AND gate input terminals. This switch 32, may for example, be a switch intended to control the vehicle parking lamps. Further explanation will be given hereinafter in the discussion of the operation of the system.

Since the decoders 26, 27 operate as a 1 of 16 decoder only one of the groups of AND gate $31^{\underline{a}}$ to $31^{\underline{q}}$ is enabled at any given time. The remainder of the circuit shown in Figure 3 is intended to ensure that the outputs from the enabled AND gate are communicated to the output terminals 33, 34, 35 and 36. If sixteen input OR gates were readily available the circuit would simply consist of four such gates. However, since such gates are not readily available the same logical function is achieved using eight input NOR gates $37^{\underline{a}}$, to $37^{\underline{h}}$ and four two input NOR gates $38^{\underline{a}}$ to $38^{\underline{d}}$. Most of the connections between the AND gates 31 and the NOR gates 37 are omitted for simplicity but these connections will be readily understood by one skilled in the art.

Returning now to Figure 1 it will be appreciated that each four bit binary output of the counter 25 represents the address code of óne of the digital control circuits 15, 16, 17, 18 etc of Figure 1 and output of the lógic circuit 30 represents the utilization code of that group. Commencing at an instant when the output of the counter 21 becomes 0000, therefore, the C input of selector 20 is 0 so that the data at $X_0$ (i.e., the least significant bit of the address code) appears at the Z data output terminal. When the counter 21 output changes to 0001, the $X_1$ data appears at Z, at 0010 the $X_2$ data appears at Z, and at 0011 the $X_3$ data appears at Z. Thus during these first four counts the address code appears in pcm form at the Z output. At a count of 0100 the $X_4$ data appears at Z and so on, so that during these next four counts the utilization code appears at Z in pcm form. At a count of 1000 the $X_4$ data appears again at Z so that the utilization code is transmitted again. During the final four counts of the 16 count cycle the output of gate 24 goes high to disable the selector 20 and to cause clocking of the counter 25.

The Z data output terminal of the selector 20 is connected by two logical inverters 40, and a resistor 41 to the base of a pnp transistor 42 the emitter of which is connected to the supply rail 12 and the collector of which is connected to the data rail 10.

The master clock rail 11 is controlled by another transistor 45 with its base connected via a resistor 46 to the C output terminal of the counter 21, its emitter connected to the supply rail 12 and its collector connected to the rail 11. Thus the signal on the master clock rail 11 is high during transmission of the address code and during the second transmission of the utilization code, but low during the other two quarters of the cycle of counter 21.

Figure 2 also shows some components of a failure warning system which will be described hereinafter.

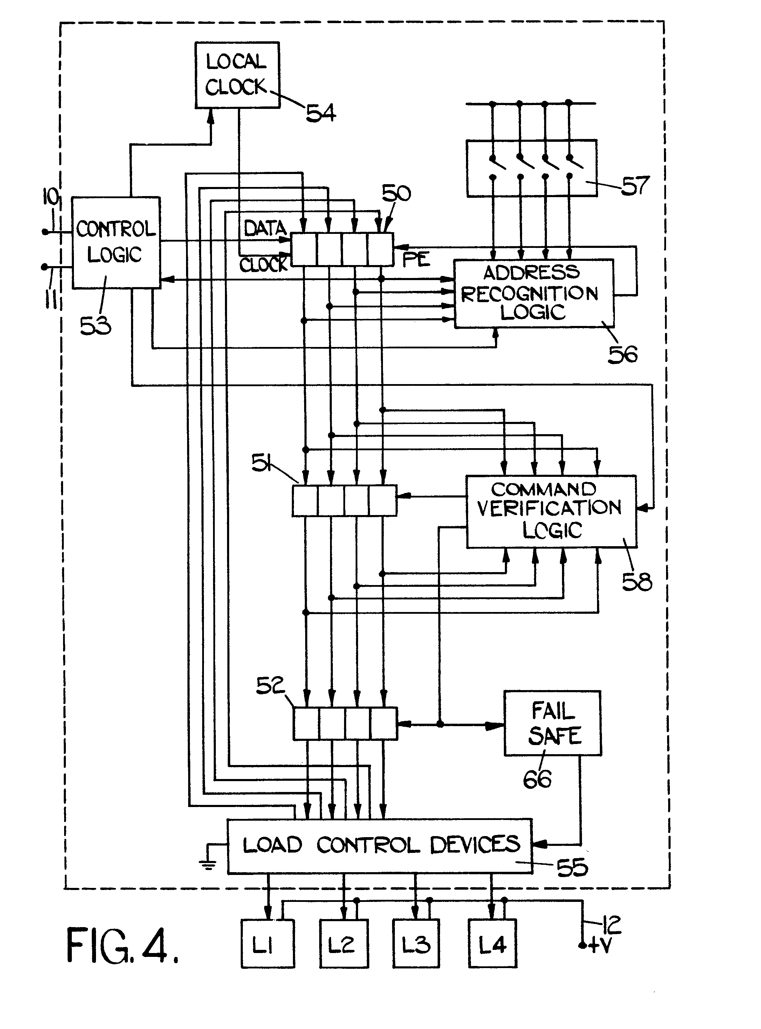

Turning now to Figure 4 the digital control circuit
includes a shift register 50 and two 4 bit latches 51 and
52. The shift register 50 may be regarded as an input
register since it receives data from the data rail 10 under
the control of a control logic circuit 53 and a local
clock 55. The logic circuit 53 acts to admit data pulses
from the data rail 10 to the register 50 whilst the signal
on the master clock rail 11 is high.

The latches 51 act as a buffer register which receives
data from the register 50 at certain instants as will be
explained hereinafter. The latches 52 act as an output
register which receives data from the latches 51 and
provides output signals actually controlling the load control devices 55.

The register 50 also receives data at one stage in
the cycle from data outputs associated with the load control devices (see Figure 5) and this data is subsequently
clocked out on to the data rail 10 under the control of the
logic 53. The "parallel enable" terminal of the register
50 is controlled by address recognition circuit 56 which
produces an output whenever the address code in the register 50 is the same as the code set up on four switches 57
(or conductive links) of the control circuit.

For controlling loading the latches 51 and 52 there
is a command verification logic circuit 58 the output of
which goes high at an appropriate instant in the cycle if
the codes stored at that instant in the register 50, and
the latches 51 are identical. One output terminal of
circuit 58 is connected directly to the LOAD terminal of
the latches 52 and another to the LOAD terminal of the
latches 51.

At the beginning of a pulse train of the pulse code modulated signal generator, the master clock rail 11 signal goes high thereby resetting the local clock. The local clock 54 is approximately synchronised with the clock 22 to a degree of accuracy sufficient to ensure that during the first twelve counts of the local clock 22, the local clock signal goes high whilst the signal from clock 22 is high. Greater accuracy of synchronisation is unnecessary. Each local clock signal causes the data present on the data line to be clocked into the register 50. Thus, after four clock pulses the register 50 contains the address code. At this stage the address recognition logic circuit 56 provides a pulse to the "parallel enable" terminal of the register 50, if (and only if) the address code in the register 50 matches the address of that group as set up on the switches 57.

The data from the load control devices 55 is thus loaded into the register 50 so that the next four pulses of the clock cause this data to be fed serially from the last stage of the register to the data rail 10 via the logic circuit 53 (the master clock rail 11 signal being low at this stage).

The next four clock pulses cause the utilization code to be fed serially into the register 50 and circuit 58 causes the latches 52 to receive data from the latches 51 if the contents of register 50 and the latches 51 are the same or the latches 51 to receive data from the register 50 if not.

During the next four clock pulses the system is quiescent to allow the load control devices 55 time to operate.

It will be appreciated that the existing commands to the load control devices 55 are not changed as soon as the utilization code is changed as a result of one of the switches in the switch matrix having been operated. Instead
no action is taken until the new utilization code has been
received in two successive cycles. As a result any noise
pulses entering the system will not have any effect on the
load control devices. Should a noise pulse occur during
the address code transmission stage (so that the utilization code is received by the wrong group) or during the
utilization code transmission stage, the in-correct
utilization code will be entered into the register 51, but
since it is very unlikely that the same fault will occur,
at precisely the same instant in the next following cycle,
the utilization code will be corrected in the next following cycle and there will be no effect on the load control
devices.

Turning now to Figure 5, each of the load control
devices includes an npn Darlington transistor $60^{\underline{a}}$ $60^{\underline{b}}$ $60^{\underline{c}}$
$60^{\underline{d}}$ with its emitter earthed and its base connected by a
resistor $61^{\underline{a}}$, $61^{\underline{b}}$, $61^{\underline{c}}$, $61^{\underline{d}}$, to the appropriate output
terminal of the register 52. The collector of each such
transistor is connected by a relay winding $62^{\underline{a}}$, $62^{\underline{b}}$, $62^{\underline{c}}$,
or $62^{\underline{d}}$, to the supply rail 12. The load devices $L_1$, $L_2$,
$L_3$ and $L_4$ are connected in series with normally open
contacts of respective ones of the relays between the supply
rail 12 and earth.

The load condition data signals are derived from
connections to the junctions of the loads with their respective control contacts, such contacts being bridged by
resistors $63^{\underline{a}}$, $63^{\underline{b}}$, $63^{\underline{c}}$, and $63^{\underline{d}}$ so that these signals are
high when the contacts are closed, but low when the contacts are open.

For enabling the loads to be selectively energised in
the event of a failure of the electronics there is provided
a "failsafe" circuit 66 which is normally held inactive by
pulses from the command verification logic circuit 58. The "failsafe" circuit includes an input capacitor 75 connecting the output terminal of the circuit 58 to the anode of a diode 67, with its cathode connected to one side of the capacitor 68 the other side of which is grounded, a resistor 69 being connected across this capacitor. A further diode 76 has its cathode connected to the anode of diode 67 and its anode grounded. The cathode of the diode 67 is also connected to the base of a pnp transistor 70 via a resistive potential divider 77, 78 the emitter of which is connected to the supply rail 12 and the collector of which is connected via resistive potential divider 79, 80 to the base of an npn transistor 71. The emitter of the transistor 71 is connected to the earth rail and its collector is connected by a load resistor 72. The collector of the transistor 71 is also connected to the cathodes of three diodes $73^a$, $73^b$, $73^c$ and $73^d$ associated with the load control devices of the loads $L_1$, $L_2$, $L_3$ and $L_4$ respectively. In the case of loads $L_1$, and $L_2$ it is required for these to remain energised in failsafe condition, whilst loads $L_3$ and $L_4$ are required to be de-energised. Diodes $73^a$ and $73^b$ therefore have their anodes connected to the collectors of the transistors $60^a$ and $60^b$, whilst diodes $73^c$ and $73^d$ have their anodes connected to the bases of the transistors $60^c$ and $60^d$.

Whilst the system is operating correctly there are pulses delivered at intervals by the circuit 58. These pulses keep the transistors 70 and 71 switched off. Should no such pulses appear capacitor 68 will discharge through resistor 69 and transistor 71 will turn on hard, effectively grounding the cathodes of the diodes $73^a$ to $73^d$. Diodes $73^a$ and $73^b$ sustain current in the relay windings $62^a$ and $62^b$ and diodes $73^c$ and $73^d$ turn off the transistors $60^c$ and $60^d$ irrespective of the signals from the register 52.

In addition a further diode 74 has its anode connected to the cathodes of the diodes $73^a$ to $73^d$ and its

cathode connected to the supply rail 12. This diode 74 provides a path for recirculating current when any of the transistors $60^a$ to $60^d$ is switched off.

Reverting now to the failure warning circuit included in Figure 2, this circuit includes an AND gate 100 with inputs from the clock 22 and from the C output terminal of the counter 21. The output of this gate 100 is applied to two further AND gates 101, 102. Gate 101 has an input from the Z terminal of the selector 20 and another input via an inverter 103 from the data rail 10. Gate 102 has a direct input from the data rail 10 and an input from the terminal Z via an inverter 104.

The failure warning **circuit** is operative during the first transmittal of utilization code, at which time the signals on the data rail 10 are those derived from the load control devices. If at any time whilst gates 101 and 102 are enabled by gate 100 (i.e. during the four clock pulses whilst C is high) the Z output is high but the data rail signal is low gate 101 will produce an output, indicating a filament or actuator failure. Similarly if the Z output is low whilst the data rail signal is high gate 102 will produce an output, indicating a system failure.

The system described above provides a multiplex control system for a plurality of separate loads which overcomes many of the prior art shortcomings. The system has very high immunity to interference and also incorporates simple fault monitoring and failsafe functions.

0000427

The system described is capable of being used for monitoring various functions as well as providing control. Thus, for example, an oil pressure warning switch may be connected appropriately to one of the groups of "load control" devices so that when that group is addressed one of the bits of the four-bit code transmitted back to the central unit will indicate whether this switch is open or closed.

In addition the data line can also be used for the transmission of analog signals such as fuel gauge signals. In order to permit such transmission one of the stages of the shift register 50 may be capable of receiving and storing analog signals instead of just digital signals. When the address code has been recognised the analog signal is received by this stage of the register 50 and then transmitted back to the central unit along with the other three digital signals. Preferably the stage which is suitable for analog signals is that from which the output to the data rail is taken.

With small modifications an extra bit of address code can be handled by the circuit described. The modifications required in Figure 4 included the addition of an extra switch 57 and a connection between the data output of the control logic 53 to the address recognition logic. The first four internal clock pulses clock the first four bits of the address code into the register 50, but clocking of the latter is inhibited during the fifth pulse so that the signal on the data rail at this stage is not clocked into the register. The address recognition comparison is carried out during this fifth clock pulse.

Although the p.c.m. generator 13 is described above in terms of conventional CMOS hardware, the function can also be carried out conveniently utilising a suitably programmed micro-processor unit. The same unit can be used to process the data received from the individual groups A, B, C, D, etc and provide a suitable display.

The following features of the apparatus described assist in optimising noise immunity and ensuring that only valid outputs are obtained;

(a)  The control logic of each group A,B,C,D, etc is only open for one third of the transmission period, except for the group which is addressed,

(b)  the local clocks of the non-addressed units are inhibited except during address transmission,

(c)  the utilization codes must be verified by being identical in two successive cycles before it is acted upon.

(d)  any incorrect output stage will be corrected after only 2 successive cycles.

(e)  synchronisation with the master oscillator cannot be lost,

(f)  CMOS integrated circuits, which have inherently high noise immunity, can be used for the receiver units,

(g)  each receiver unit can have a low input impedance (about 10 Kohms). Noise sources must therefore have a very low output impedance if they are to provide sufficient current to upset receiver operation.

CLAIMS

1.     A vehicle electrical system comprising a plurality
of switch devices, a multiplicity of load devices each
controlled by a corresponding load control device arranged
in a number of groups, a pulse code modulated signal generating device cyclically generating on a data rail a pulse
train consisting of a series of digital words, each word
including one set of bits defining an address code for the
various groups of load control devices and a further set of
bits defining a utilization code indicating the required
state of the load control devices in the group in accordance
with the condition of associated ones of the switch devices,
each group of load control devices having an associated
digital control circuit connected to said data rail including address code recognition means and storage means for
storing the utilization code associated with its address
code in the pulse train, said storage means providing output
signals to the load control devices of the group and means
for updating the utilization code stored in the storage
means only when the same utilization code is received by
the digital control circuit in two successive cycles of
the signal generating device.

2.     A system as claimed in claim 1 further comprising a
clock signal rail extending from the signal generating
device to all the digital control circuits and carrying in
use clock signals generated in said signal generating device
for use in synchronising the digital control circuits.

3.    A system as claimed in claim 2 in which each digital
control circuit includes an internal clock device connected
to be reset periodically by a clock signal on said master
clock line.

4.    A system as claimed in claim 3 in which each digital
control circuit includes first, second and third registers,
said third register constituting said storage means, input
control logic controlled by the master clock rail for
admitting said one set of bits to the first register in each
cycle of operation and controlled by the address code
recognition means for admitting said further set of bits
to said first register on recognition of the address code
appropriate to a specific load control device, said updating
means including a command verification logic circuit for
loading the contents of the first register into the second
register when the contents of the first and second registers
are different and for loading the contents of the second
register into the third register when the contents of the
first and second registers are the same.

5.    A system as claimed in claim 4 in which each digital
control circuit further comprises a fail-safe circuit
arranged to cause selected ones of the loads in the group
of loads controlled thereby to be energised in the event
that the contents of the first and second registers remain
different for more than a predetermined time interval.

6.    A system as claimed in claim 5 in which each of the
load control devices is a relay energised by the logic
control circuit through the intermediary of a transistor,
the relay windings of the relays associated with said
selected ones of the loads being connected by diode means
to said fail-safe circuit.

7.    A system as claimed in claim 6 in which each of said relay windings of the relays associated with said selected ones of the loads is connected at one end to one of a pair of supply rails and at the other end by the associated transistor to the other of said supply rails, said diode means comprising a diode for each such relay winding connecting said other end of the relay winding to the output of the fail-safe circuit.

8.    A system as claimed in claim 7 including a further diode connecting the output of the fail-safe circuit to said one supply rail whereby said diodes act as recirculating diodes for the respective relay windings.

9.    A system as claimed in any preceding claim  in which said fail-safe circuit includes a capacitor connected by a diode circuit to the output of the command verification logic so as to be charged periodically when the contents of the first and second registers are the same, a discharge path for the capacitor and an output transistor connected to the capacitor so as to become conductive and connect the output terminal of the failsafe circuit to said other supply rail when the capacitor discharges beyond a predetermined point.

10.    A system as claimed in any preceding claim further comprising load continuity means associated with each load control device for detecting current flow through each load, means incorporated in each digital control circuit for transmitting on the data rail from the digital control circuit a group of bits indicating the existing state of the load control devices, and means associated with the signal generating device for receiving such group of bits and comparing them with the utilization code for that group of load control devices.

11. A system as claimed in any preceding claim in which the signal generating device comprises a counter connected to counter pulses from a master clock, the n most significant bits of the counter output constituting the address code, a decoder circuit connected to the n most significant bit outputs of the counter to produce a 1 of $2^n$ output, a logic circuit connected to the decoder output and to said switch devices to produce a utilization code corresponding to each address code in accordance with the state of said switch devices, and a data selector device having data inputs from the n most significant bit outputs of the counter and from said logic circuit and control inputs from the least significant bit outputs of the counter, the data output of said data selector device being connected to the data rail.

12. A vehicle electrical system substantially as hereinbefore described with reference to the accompanying drawings.

427

FIG.I.

FIG.2.

FIG.3.

FIG.4.

FIG.5.

## DOCUMENTS CONSIDERED TO BE RELEVANT

| Category | Citation of document with indication, where appropriate, of relevant passages | Relevant to claim |
|---|---|---|
| X | <u>DE - A - 2 433 025</u> (BOSCH)<br>* Page 6, line 1 to page 11, line 15; page 14, line 17 to page 15, line 24; page 16, line 31 to page 21, line 15; figures 1,2,3,6 and 9 * | 1,2,10, 11 |
| | <u>US - A - 3 864 578</u> (LACKEY)<br>* Column 2, line 37 to column 3, line 33; column 4, line 37 to column 5, line 19; column 8, lines 51 to 54; figures 1,3,4A and 4B * | 1,6,7, 10 |

**CLASSIFICATION OF THE APPLICATION (Int. Cl.²)**

B 60 R 18/04
H 04 Q 9/14

**TECHNICAL FIELDS SEARCHED (Int.Cl.²)**

B 60 R 18/04
H 04 Q 9/14
G 08 C 15/12

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 08-09-1978 | WANZEELE |